(19) **Europäisches Patentamt**

**European Patent Office**

**Office européen des brevets**

(11) **EP 1 361 413 A1**

(12) # EUROPEAN PATENT APPLICATION

(43) Date of publication:
**12.11.2003 Bulletin 2003/46**

(51) Int Cl.⁷: **G01B 11/00**, G01B 11/02,
G01B 11/08, G01B 11/24

(21) Application number: **02447085.8**

(22) Date of filing: **08.05.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Metris N.V.**
**3001 Leuven (BE)**

(72) Inventors:
• **de Jonge, Lieven**
**3090 Overiijse (BE)**

• **van Coppenolle, Bart**
**3210 Linden (BE)**
• **Vanderstraeten, Denis**
**1320 Hamme-Mille (BE)**

(74) Representative:
**Brants, Johan Philippe Emile et al**
**De Clercq, Brants & Partners cv**
**Edgard Gevaertdreef 10a**
**9830 Sint-Martens-Latem (BE)**

(54) **Method for self-calibration of a non-contact probe**

(57)     The present invention relates in a first aspect to a method for a non-contact probe calibration on a calibrated localizer, using only one artifact and the calibrated localizer. In a second aspect the present invention relates to a method for the calibration and qualification of a non-contact probe on a localizer in a single step procedure, using a single artifact.

EP 1 361 413 A1

**Description**

**Field of the invention**

The present invention relates in a first aspect to a method for a non-contact probe calibration on a calibrated localizer. In a second aspect the present invention relates to a method for the calibration and qualification of a non-contact probe on a localizer in a single step procedure, using a single reference object, also referred to as an artifact.

**Background of the invention**

Generally a non-contact probe comprises of one or more emitter sources and one or more receivers. An emitter source projects waves, for example light waves, on the object of interest, the receiver(s) comprising for example a camera, capture(s) the returning waves from the object. For instance, if the receiver is a CCD-camera, it will take one or more shots of the object. By moving the object relatively to the non-contact probe or vice a versa, shots of the complete object can be taken, i.e. the object is being scanned. Each shot represents a 1D, 2D or 3D projection of the object depending on the physical form and working principle of the receiver(s). To obtain accurate 3D points on the surface of the object, relatively to a fixed coordinate system, from multiple shots the following system parameters are preferably required:

1. the 3D position of the emitter source(s) relatively to the receiver(s);
2. the 3D position and orientation of the emitted waves, relatively to the receiver(s), coming from the emitter source(s);
3. the characteristics such as focal point of lenses of the receivers used in the non-contact probe;
4. the dimensions and measuring resolution of the receiver(s); and
5. the 3D position and orientation of the non-contact probe or the object relative to a fixed coordinate system, for each receiver capture.

The actual values of the parameters 1 to 4 are calculated during the calibration. Some of the actual values of parameter 5 are calculated during the qualification procedure, others are given values readily obtainable from the object-non-contact probe set-up. When these parameters are calculated for the given non-contact probe, the conversion, also called compensation, from receiver readings to accurate 3D points can be done.

To be able to move the non-contact probe relatively to the object, the probe is mounted on a localizer. This localizer can be a structure, portable or non-portable, on which the probe is mounted, like for example a tripod. This localizer can also be a structure with moving axes, motorized or non-motorized, where the probe is mounted on the end of said axes, dependent to all other axes, like for example a robot, a milling machine or coordinate measuring machine. This last type of localizers have the possibility to record the position and/or the rotation of the probe. They are also called calibrated localizers.

Some of the state-of-the-art techniques are actually calculating the parameters 1 to 5 explicitly using dedicated measurements in a sequential manner. Adjusting these parameters is difficult because of their complex interactions and can be time consuming.

Other state-of-the-art techniques for calibration and qualification do not calculate these parameters explicitly. In the first step, the receiver readings are first transformed in one, two or three dimensions, depending if the receiver itself has one, two or three dimensions. In this *calibration* step a receiver reading in receiver units is transformed to a point in e.g. SI units. The calibration can take several phenomena into account; for example, correcting the perspective since the object is not always parallel to the receiver or scaling correctly the readings. Finally, and this is a complex operation, it must model correctly systematic reading errors in the receiver(s).

The second step, the *qualification,* consists in determining the accurate position and orientation of the non-contact probe relatively to a fixed coordinate system. The qualification procedure is generally performed by the end-user using special artifacts or other measuring equipment. The qualification procedure often requires an essential manual alignment of the artifact/measuring equipment with the non-contact probe.

Both steps, calibration and qualification, are based on some parameters that are tuned or optimized to obtain the 3D points accurately. All state of the art algorithms determine the values of the parameters for the two steps separately, usually scanning different artifacts with known features, dimensions, ...

Although, it is easier to obtain few parameters at a time, this technique suffers from major drawbacks.

The various parameters have complex interactions and it is extremely difficult, if not impossible, to predict the effect of an individual parameter. Hence, an error at the very start can propagate and produce faulty results in the determination of the subsequent parameters. Unfortunately, there is yet no correct method to back-propagate the information. As a result, even with the utmost care, the parameter fitting will be sub-optimal in the sense that the accuracy of the three-dimensional points will not be the best.

Another drawback of the de-coupled procedure is that it requires many high-level user interactions, which is time consuming and unreliable.

As a consequence, these techniques for calibration and qualification cannot be performed at the user's site, nor by the user itself.

To overcome these problems, the present invention provides a novel integrated approach using one single artifact. The present invention provides a novel method that computes all probe parameters in one single step using only one artifact. In this approach, a general function converts directly a receiver reading into a three dimensional point. This function corresponds to a sequence of calibration and qualification and therefore, depends on many parameters similar to the ones used in the classical de-coupled technique.

However, by expressing the conversion with one function, all interactions between the parameters are considered. Also, if the object being measured is known, the influence of a single parameter can directly be measured in terms of accuracy of the resulting 3D point.

The present invention provides a method to scan a known reference object and to use this information to find the values of the parameters that give the most accurate points. A single requirement of this method is the knowledge of the class of the reference object, like sphere or box, the actual sizes, aspect ratio, ..., and a volume scan of the object. With these data, the entire procedure, calibration, and qualification is performed automatically.

**Detailed description of the invention**

A "non-contact probe" can be defined as any device mounted on a localizer that through non-contact sensing conducts 1D (distance), 2D or 3D coordinate measurements.

A "localizer" is defined as any system positioning and orientating a non-contact probe in space and a "calibrated localizer" as a localizer that returns the position and/or the orientation of the non-contact probe in 1 D-, 2D- or 3D coordinates.

A "receiver", is an electronic device in the non-contact probe that captures the waves coming from the object to be measured, resulting in one or multiple electrical readings. Most of the time these electrical readings are voltage readings on pixels of a CCD-camera.

A non-contact probe generally comprises of one or more emitter source(s), sending (e.g. light) waves to the object of interest, and one or more receivers, which capture the part of the object that is "hit" by the emitter source. The conversion of the electrical readings of the receiver to an accurate 3D point requires the steps of calibration and qualification executed on beforehand.

A "point cloud generator" is a system that consists of 2 components, namely a non-contact probe and a calibrated localizer whereby both components can be used for 1 D, 2D or 3D position and/or orientation measurements.

"Calibration" is the procedure to identify the conversion between the electrical reading of the receiver in the non-contact probe and 1D, 2D or 3D point coordinates in SI units. In other words, calibration is the procedure to transform an electrical reading in accurate point coordinates. These point coordinates are calculated relatively to a coordinate system connected to the non-contact probe.

'Qualification" is defined as a procedure of completely and accurately identifying the position and orientation of the non-contact probe in the measuring volume of the localizer, possibly using information readily made available by the localizer itself. This procedure is to be performed each time the non-contact probe is mounted on the localizer or each time its position or orientation with respect to the localizer is changed. Thus, qualification is the procedure whereby the position and the orientation of the coordinate system connected with the non-contact probe is defined with respect to a fixed coordinate system.

Finally, "compensation" is defined as a procedure of making the conversion between the electrical reading of a receiver in the non-contact probe and 1D, 2D or 3D point coordinates using the calculated parameters of the calibration and qualification.

The calibration and qualification steps depend on a variety of parameters, which up to now were determined individually using different artifacts. An "artifact" is used as synonym for a "reference object" and is defined as an object from which only the type of shape is accurately known: cylinder, plane, sphere, ... The dimensions of the object are not necessarily to be known with sufficient accuracy.

The present invention relates in a first aspect to a calibration method that determines all the parameters of a non-contact probe mounted on a calibrated localizer using only one artifact and the calibrated localizer.

In a second aspect the present invention allows the entire calibration and qualification procedure to be carried out in one single step using only one artifact. Hence the calibration and qualification procedure can be automated with little input from the end-user. In addition, this single step operation provides a more accurate determination of the parameters, which results in a more accurate activity of the non-contact probe.

In a first embodiment, the present invention relates to a method for the calibration of a non-contact probe mounted on a calibrated localizer whereby the localizer is used to calibrate to probe. Thus, the present invention relates to a method for the calibration of a point cloud generator, said point cloud generator consisting of a non-contact probe and a calibrated localizer, comprising determining the transformation of an electrical reading of the receivers in said non-contact probe in point coordinates relatively to said probe using said localizer.

State-of-the-art techniques performed the calibration of the non-contact probe, dismounted from the localizer, on a separate, dedicated device, mostly in well-defined metrology room conditions.

The method according to the invention is performed automatically, and preferably said method is executed at a user's site.

In a further embodiment, the present invention relates to a calibration method according to the invention whereby the said method is executed on a single artifact, whereby said artifact consists of one or more spheres, cylinders or boxes.

Furthermore, the present invention relates to a method for the calibration and qualification of a non-contact probe whereby both steps are performed simultaneously. Therefore, in another embodiment, the present invention relates to a method for the calibration and qualification of a non-contact probe comprising determining the transformation of an electrical reading of the receivers in said non-contact probe in point coordinates relatively to the said probe and identifying the position and orientation of the said non-contact probe in the measuring volume of the said localizer, thereby determining calibration and qualification parameters simultaneously.

The former technologies of the non-contact probes performed the calibration and the qualification in two different steps. The present invention consists of a one step procedure for calibration and qualification. By using the same measurements of the non-contact probe mounted on the localizer on only a simple artifact, the non-contact probe is calibrated and qualified. This novel method is characterized by some major improvements compared to the state-of-the-art technologies. The same measurement procedure can be followed for calibration and qualification. Furthermore, calibration and qualification are performed in a single step. The calibration can be conducted by the end-user, where previously the calibration procedure was performed in the factory during production of the non-contact probe or at the end-users location by the service-engineers of the manufacturer. Therefore, the present method represents not only an easier but also a more time-effective method.

In a further embodiment, the present invention relates to a method for the calibration and qualification of a non-contact probe whereby calibration and qualification parameters is performed on a same artifact. In a preferred embodiment, said artifact consists of one or more spheres, cylinders or boxes. According to the present invention the entire calibration-qualification procedure can thus be totally automated with little user interaction, and can be performed at the user's site.

As mentioned, the calibration and qualification steps of a non-contact probe depend on a variety of parameters. In another embodiment, the present invention relates to a method for determining the parameters of a non-contact probe in a single step using a single artifact.

The present invention is based on a general mapping function that directly converts a receiver reading into a 3D point. This function depends on various parameters that need to be numerically determined. In the following description, the general mapping function according to the invention is described with use of the conventional division in calibration and qualification. However, it is the aim of the invention to provide an approach that mixes these two steps in one single function. According to the invention, a single measurement procedure to establish the parameters has a greater accuracy than establishing the set of parameters in separated methods.

1. Calibration

The calibration step consists essentially of a mapping from the receiver readings to 1 D, 2D or 3D point relatively to a coordinate system connected with the non-contact probe. The dimensions of the point are equal to the dimensions of the receiver. For example a camera with a square CCD-array will produce two-dimensional points after calibration. The goal of the calibration is to express the one-, two- or three-dimensional coordinates of a point in terms of its receiver readings.

The *"mapping"* provides a description of this correspondence. It consists of a function that maps a reading from the receiver domain of all readings to a 1D, 2D or 3D point. Ideally, the mapping function should be able to model various physical effects of the non-contact probe such as the perspective, imperfectness of working principle or heterogeneous reading resolution and sensitivity.

Several methods have already been proposed in the literature that define generic or specialized mapping functions. The simplest method consists in defining one single function that covers the entire mapping area. The form of this function is critical and prior knowledge of the problem is necessary to make an educated choice. The second class of mapping methods is generic; it is able to effectively model any mapping function provided that the number of parameters is sufficiently high. These methods work by a divide-and-conquer approach, dividing the mapping area in smaller area and defining simple *shape* functions for the local mapping. The local mapping is then aggregated into a global mapping.

In the present invention any general mapping function can be used, as long as the function offers enough detail to model an accurate conversion from reading to point. For the sake of generality, all points here are considered to be three dimensional. One or two dimensional point can be represented by a three dimensional point without any loss of information. The general representation is given below where $P_r$ (resp. $P_{3D}{}^c$) represents the receiver reading (resp. 3D point), $f$ is the general mapping function

$$P_{3D}{}^c = f(P_r), \tag{1}$$

With $f$ defined as

$$f: D \rightarrow \Re^3. \tag{2}$$

and $\Re^3$, the three dimensional space and D, the domain of the all possible readings of all receivers:

$$D = \cup_{\forall i} D_i \tag{3}$$

$$D_i \cap D_j = \varnothing \text{ for } i \neq j \tag{4}$$

$D_i$, the domain of all possible readings of the $i^{th}$ receiver and this for all receivers.

A crucial question concerns the amount of data needed to compute the actual parameters of the mapping function. Unfortunately, there is no definite answer to this question. It depends on the accuracy needed and on the scale of the phenomenon studied.

## 2. Qualification

Qualification consists of a three-dimensional mapping. The calibration maps the reading onto a point located in the physical space, relatively to a coordinate system fixed to the non-contact probe. The exact position of this non-contact probe and the determination of its orientation are the tasks of the qualification. The position and the orientation will be determined relatively to a coordinate system fixed to the object to be scanned.

The non-contact probe coordinate system is described by 6 parameters, three translation components and three rotation components. The system can be decoupled into the translation component m of the non-contact probe and in the rotation matrix Q. A three-dimensional point $P_{3D}{}^q$ relatively to the fixed coordinate system is written as

$$P_{3D}{}^q = Q\, P_{3D}{}^c + m, \tag{5}$$

with $P_{3D}{}^c$ a three-dimensional point relatively to the non-contact probe coordinate system.

In general as the localizer moves the non-contact probe and/or the object in space the relative position and orientation of the probe to the object changes. In other words the rotation matrix Q and translation component m is changing during movement. Dependent on the type of localizer, a coordinate measuring machine or robot, some of the components of Q and m are constant and/or known during the movement of the probe and the object. These types of localizers are calibrated localizers. For example a coordinate measuring machine will produce the position of the probe and the object during movement with a good accuracy. In this case the component m is considered to be known and does not need to be identified during the qualification.

As described above, the necessary steps to convert individual readings of the receivers into actual three-dimensional coordinates, with (if available) the knowledge of the position and orientation of the probe given by the localizer at discrete time steps, were de-coupled. By aggregating these various steps, we can thus express directly a 3D point $P_{3D}{}^q$ in terms of a receiver reading $P_r$ by

$$P_{3D}{}^q = Q(f(P_r)) + m, \tag{6}$$

where *f* is the calibration function, *Q* and *m* are the position and orientation of the probe stemming from the qualification. These functions and these symbols have been defined in eqs (1) to (5).
The equation (6) contains the following parameters to be defined in the calibration-qualification procedure:

- • the function *f* is a general mapping function with enough parameters to accurately model the transformation from receiver reading to 3D point in the probe space. If for example a polynomial function is chosen as mapping function, than the parameters are the coefficients. The degree and the type of polynomial are not parameters but constants.
- • Depending on the accurate information obtained from the localizer, three translation components (the position *m*) and three rotations (the orientation *Q*) are considered as parameters or not. For example if the localizer is a CMM with accurate information on the position of the probe in the localizer space and the probe performs only parallel movements, the three rotations (the orientation Q) are the only parameters.

All these parameters can be grouped in a parameter set S and the equation (6) can be rewritten as:

$$P_{3D}{}^{q} = F(P_r, S) \qquad (7)$$

With *F* the compensation function based on a calibration - qualification procedure with parameter set *S*:

$$F: D \rightarrow \Re^3 \qquad (8)$$

And *D* defined as in eqs. (3) and (4).

In another embodiment, the present invention relates to a method of determining calibration and qualification parameters, which is based on a generic function, said generic function being a non-uniform rational B-spline function. The present invention relates to a new general procedure or method for determining all these parameters in a single step. In an embodiment the present invention relates to a method of determining a parameter configuration comprising the steps of:

- scanning an single artifact; and
- applying a computational procedure to adjust all said parameters directly and simultaneously using the scanning data.

Said parameter configuration comprises the parameters mentioned above which are required to establish a generic model in which the steps of calibration and qualification are integrated.
An "artifact" is used as synonym for a "reference object" and is defined as an object from which the shape is known. Typical artifacts can be spheres, cylinders or boxes. The artifact can be a composite object, consisting of different parts, whereby a part may be a sphere, another part may be a cylinder, and still another part may be a box.
In a preferred embodiment, the artifact used for calibration, qualification and position interpolation of the non-contact probe is identical to the artifact used for the qualification of the tactile or contact probe, i.e. a sphere.
This method for simultaneous determination of calibration and qualification using a single artifact has several key features. Importantly, only one single artifact is used but the exact size, location, or orientation of this artifact is irrelevant. Furthermore, all parameters are evaluated concurrently. In addition, the method performs only one scan of the reference object or artifact and very little user interaction is required. Using this method the adjusted parameters are obtained, which can be used in the above-described generic function.
In a preferred embodiment, the present invention relates to a method of determining calibration and qualification parameters comprising the steps of
**[0048]** - scanning a single artifact;

- determining the optimal location and size of said artifact using the scanning data;
- evaluating the quality of said parameter configuration via a multidimensional optimization procedure; and
- determining the best configuration of the parameters.

For instance an initial parameter configuration S can be chosen. This configuration can be used to establish the generic model described above. Subsequently, an artifact is scanned. The data obtained by a scan of this reference object is a series of receiver readings together with, but not necessarily, the positions and/or orientations of the probe relatively to the artifact. When applying the generic model, which was established using the configuration S, to this series of receiver readings a cloud of 3D points is obtained. As a result, the cloud of 3D points can be "compared" with the scanned artifact. As, nor the exact location of the reference object, nor its orientation are known, using the cloud of 3D points, first the optimal location and size of the artifact that matches the 3D points is located and then the quality of the parameter configuration is evaluated. Finally, since a cost or a quality can be assigned to each configuration S, a standard multidimensional optimization procedure can be applied to determine the best configuration $S_{best}$.

In the following description, the standard multidimensional optimization procedure is explained in more detail. Designing a proper cost function is crucial in any optimization procedure and it has been the subject of many papers in the literature. A "good" cost function should represent accurately the model being investigated without being too complex as to prevent any optimization. In other words, a minimum of the cost function should represent an optimal configuration of the parameters while plateau's in the cost function should be avoided to ensure convergence of the iterative algorithm. From a computational point of view, the cost function should also be easy to compute as it needs to be evaluated many times.

The crucial multidimensional optimization procedure of the present invention is formalized in the following description. The algorithm starts from an initial configuration $S_{ini}$ and defines it as the current configuration $S_{cur}$. Then, in a loop, the configuration is iteratively adapted, yielding each time a new $S_{cur}$, in an attempt to better match the cloud of 3D points with the artifact shape. The algorithms stops when the accuracy can no longer be improved, i.e when the cost function is at its minimum.

In the method of the present invention, the evaluation of the cost function consists of two phases. The first phase consists of determining the best position and orientation of an artifact using the 3D points obtained with the active configuration $S_{cur}$. Depending of the shape of the artifact a direct computation or an iterative computation must be performed.

In the second phase, the distance between the individual 3D points and the artifact are computed and aggregated (average square distance, variance, ...) to give the actual cost of the parameter configuration. When all distance are zero, i.e. all points lie perfectly on the artifact, the cost function is zero and the active configuration is optimal. The algorithm is given below:

1. Choose an initial configuration $S_{ini}$
2. Set initial configuration as current configuration $S_{cur} = S_{ini}$
3. Set $S_{best} = S_{cur}$ and the cost $C(S_{best}) = \infty$
4. While $C(S_{best})$ is not within the desired accuracy (as set by the user), do the following:
5. Compute the cloud of 3D points from eq. (7), using the receiver readings and $S_{cur}$
6. Evaluate the best position and location of the artifact for the computed 3D points
7. Compare the virtual artifact with the 3D points to compute the cost $C(S_{cur})$
8. If $C(S_{cur}) < C(S_{best})$, $S_{best} = S_{cur}$.
9. Choose a new $S_{cur}$

At the end of the computation, the parameters of $S_{best}$ are those that give the best representation of the artifact.

Given an artifact shape and a cloud of 3D points supposedly on the artifact, we need to recover the location and the orientation of this shape. Possible shapes of the artifact include cylinders, boxes, spheres, ... For the purpose of the illustration, the general shape matching with a sphere will be described, although the advocated procedure is general. A sphere can be described by 3 parameters for its center $c$: $(c_x, c_y, c_z)$, and one parameter for its radius $r$. For every point $p$, with parameters $(p_x, p_y, p_z)$, it is then easy to compute its distance d to the sphere as

$$d = \|p - c\|_2 - r = ((p_x - c_x)^2 + (p_y - c_y)^2 + (p_z - c_z)^2)^{1/2} - r \qquad (9)$$

or a pseudo distance

$$d' = \|p - c\|_2^2 - r^2 = (p_x - c_x)^2 + (p_y - c_y)^2 + (p_z - c_z)^2 - r^2 \qquad (10)$$

For a given set of parameters $(c, r)$, it is then possible to define a cost function:

$$C_{art}(c,r) = \Sigma d^2, \qquad (11)$$

or

$$C_{art}(c,r) = \Sigma\ d'^2, \tag{12}$$

where the sum goes over all points of the receiver(s).

Standard derivation techniques can be used to determine the values of *c* and *r* that minimize $C_{art}$. When the cost function $C_{art}$ becomes non linear, a regular multidimensional optimization procedure can be used to determine the best values of *c* and *r*.

The two cost functions C and $C_{art}$ used in the calibration-qualification procedure are described above. The general cost function *C* is used to find the parameter configuration for the calibration and qualification while the second function $C_{art}$ is used *inside* the first to find the best shape.

According to the above description, only the shape of the artifact is needed and not its actual size. As a consequence, the radius *r* of the sphere or other characteristic distance for other reference objects come into the shape-matching model $C_{art}$. Of course, if additional information is available for any type of object, such as a size, an aspect ratio, ... it can be easily used to reduce the number of parameters of the shape-matching model. In an example with a known radius, the problem reduces to the determination of the optimal sphere center c and so there are only three parameters left.

When robust optimization algorithms are used, the initial configuration is of little importance. However, when the cost function contains many local minima, providing an initial configuration close to the optimal, but unknown, configuration is desirable. With the model according to the present invention, it is also possible to automate this step. Indeed, the model according to the present invention contains two loosely connected entities, namely, the calibration and the qualification. In order to the find an initial good configuration, one of both entities is fixed and the other one is solved.

More precisely, when qualification is neglected, only the calibration is investigated. Starting from the identity mapping, i.e. a receiver reading is a 1D, 2D or 3D point, the mapping can be optimized such that the resulting points lie as closely as possible on the artifact. Note that the mapping can only be evaluated up to a rigid body motion provided by the qualification that is neglected here.

With a fixed calibration, the optimization of the, at most 6, parameters of the qualification is straightforward. These two separate optimizations result in an initial configuration parameter set that is close to the optimal configuration that will be found by optimizing all parameters at once by starting from this initial parameter set.

In another embodiment, the present invention relates to the use of a single artifact for performing the calibration and qualification procedure according to the method of the invention.

In another embodiment, the present invention relates to a computer program wherein the steps of the method according to the invention are performed. Another embodiment of the invention concerns a computer adapted and programmed to carry out the computer program according to the invention.

Moreover, the present invention also relates to a non-contact probe usable according to the method of the invention. This non-contact probe is consequently capable of performing at least 1 and preferably the 2 steps of calibration and qualification in a single operation. After these steps have been performed the non-contact probe is ready for industrial use by the end-user, until it is dismounted from the localizer or until its position or orientation is changed with respect to the localizer.

The present invention also provides for a non-contact device comprising a non-contact probe according to the invention, which is mounted on a localizer, and an artifact.

**Claims**

1.  A method for the calibration of a point cloud generator, said point cloud generator consisting of a non-contact probe and a calibrated localizer, comprising determining the transformation of an electrical reading of the receivers in said non-contact probe in point coordinates relatively to the said probe using said localizer.

2.  A method according to claim 1, whereby the said method is performed automatically.

3.  A method according to claims 1 or 2, whereby the said method is executed at a user's site.

4.  A method according to any of claims 1 to 3 whereby said method is executed on a single artifact, whereby said artifact consists of one or more spheres, cylinders or boxes.

5. A method for the calibration and qualification of a non-contact probe on a localizer comprising determining the transformation of an electrical reading of the receivers in said non-contact probe in point coordinates relatively to said probe and identifying the position and orientation of the said non-contact probe in the measuring volume of the said localizer, thereby determining calibration and qualification parameters simultaneously.

6. A method according to claim 5 whereby calibration and qualification is performed on the same artifact.

7. A method according to claims 5 or 6, whereby said artifact consists of one or more spheres, cylinders or boxes.

8. A method according to claim 1, whereby said method is performed on the same artifact as the qualification of a contact probe on the said localizer.

9. A method according to claim 8, whereby said artifact is a sphere.

10. A method according to any of claims 5-9, whereby said method is performed automatically.

11. A method according to any of claims 5-10, whereby said method is executed at a user's site.

12. A method according to any of claims 1-11, whereby said method is based on the following generic function:

$$P_{3D} = Q(f(P_r)) + m \qquad\qquad (6)$$

where

- $P_r$ is a reading of a receiver of the non-contact probe
- $P_{3D}$ is the 3D point, related to $P_r$, relatively to a fixed coordinate system
- $f$ is the general mapping function, mapping receiver readings to 1D, 2D or 3D point coordinates in SI units, relatively to a coordinate frame fixed to the non-contact probe,
- Q and resp. m are the orientation and resp. position of the non-contact probe with respect to a fixed coordinate frame.

13. A method according to any of claims 1-12, whereby the said general mapping function in the said generic function is a non-uniform rational B-spline function.

14. A method according to any of claims 1-13, whereby the parameters of said generic function are determined in a single step using a single artifact.

15. A method according to any of claims 1-14, whereby determination of said parameters comprises the steps of

- scanning a single artifact; and
- applying a computational procedure to adjust all said parameters directly and simultaneously using the scanning data.

16. A method according to any of claims 1-15, whereby determination of said parameters comprises the steps of

- scanning a single artifact;
- determining the optimal location and size of said artifact using the scanning data;
- evaluating the quality of said parameter configuration via a multidimensional optimization procedure; and
- determining the best configuration of the parameters.

17. Use of a single artifact for performing the calibration and qualification procedure according to the method of any of claims 1-16.

18. A computer program wherein the steps of the method according to any of claims 1-16 are performed.

19. Computer adapted and programmed to carry out the computer program according to claim 18.

**20.** A non-contact probe usable according to the method of any of claims 1-16.

**21.** A non-contact device comprising an artifact and a non-contact probe according to claim 20 mounted on a localizer.

European Patent
Office

**EUROPEAN SEARCH REPORT**

Application Number

EP 02 44 7085

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 39522 A (BRITISH AEROSPACE ;SHERIDAN MILES (GB)) 6 July 2000 (2000-07-06)<br><br>* page 2, line 10 - page 5, line 5 *<br>* page 11, line 4 - page 21, line 6 *<br>* figures 1,4,6,7,9,11 * | 1-8, 10-12, 14,15, 17-21 | G01B11/00<br>G01B11/02<br>G01B11/08<br>G01B11/24 |
| Y | | 9,13 | |
| A | | 16 | |
| Y | WO 00 41141 A (INTEL CORP ;MACRI DEAN (US)) 13 July 2000 (2000-07-13)<br>* claims 1-3 *<br>* figures 2-7 * | 13 | |
| Y | PATENT ABSTRACTS OF JAPAN<br>vol. 2000, no. 09,<br>13 October 2000 (2000-10-13)<br>-& JP 2000 180103 A (AGENCY OF IND SCIENCE &AMP;TECHNOL), 30 June 2000 (2000-06-30)<br>* abstract *<br>* figures 1,2 * | 9 | |

**TECHNICAL FIELDS SEARCHED (Int.Cl.7)**

G01B

The present search report has been drawn up for all claims

| Place of search | Date of completion of the search | Examiner |
|---|---|---|
| MUNICH | 30 September 2002 | Grand, J-Y |

EPO FORM 1503 03.82 (P04C01)

**ANNEX TO THE EUROPEAN SEARCH REPORT
ON EUROPEAN PATENT APPLICATION NO.**   EP 02 44 7085

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2002

| Patent document cited in search report | | Publication date | Patent family member(s) | | Publication date |
|---|---|---|---|---|---|
| WO 0039522 | A | 06-07-2000 | AU | 1879100 A | 31-07-2000 |
| | | | EP | 1147366 A1 | 24-10-2001 |
| | | | WO | 0039522 A1 | 06-07-2000 |
| WO 0041141 | A | 13-07-2000 | AU | 6139299 A | 24-07-2000 |
| | | | CN | 1338091 T | 27-02-2002 |
| | | | EP | 1141900 A1 | 10-10-2001 |
| | | | TW | 432338 B | 01-05-2001 |
| | | | WO | 0041141 A1 | 13-07-2000 |
| JP 2000180103 | A | 30-06-2000 | JP | 3005681 B2 | 31-01-2000 |

EPO FORM P0459

For more details about this annex : see Official Journal of the European Patent Office, No. 12/82